# FASCICULE DE BREVET EUROPEEN

(11) **EP 1 349 416 B1**
(45) Date de publication et mention de la délivrance du brevet: **24.05.2006**
(21) Numéro de dépôt: 03290720.6
(22) Date de dépôt: 21.03.2003
(51) Int. Cl.: H04Q 11/00

(54) **Méthode dynamique d'insertion de données aux noeuds d'un réseau de transmission optique**
Verfahren zur dynamischen Dateneinfügung in optischen Übertragungsnetzwerkknoten
Method for dynamic data insertion in optical transmission network nodes

(30) Priorité: 28.03.2002 FR 0203912
(43) Date de publication de la demande: 01.10.2003
(73) Titulaire: ALCATEL, 75008 Paris (FR)
(72) Inventeur: Le Sauze, Nicolas, 91440 Bures-sur-Yvette (FR); Dotaro, Emmanuel, 91370 Verrieres le Buisson (FR)
(74) Mandataire: Sciaux, Edmond

(56) Documents cités:
- EP-A- 0 462 349
- EP-A- 1 052 808
- WO-A-01/69834
- WO-A-01/86998
- BENGI K ET AL: "DESIGN CONSIDERATIONS FOR A SLOTTED OTDM RING-LAN" PROCEEDINGS OF THE EUROPEAN CONFERENCE ON NETWORKS AND OPTICAL COMMUNICATIONS 2000. NOC 2000. BROADBAND ACCESS, WDM METRO AND NETWORK MANAGEMENT, PROCEEDINGS OF THE EUROPEAN CONFERENCE ON NETWORKS AND OPTICAL COMMUNICATIONS. NOC, AMSTERDAM: IOS PRESS, vol. PRT 2 OF 2, 2000, pages 191-198, XP000993865 ISBN: 1-58603-068-X

## Description

La présente invention concerne la technologie des transmissions de données dans les réseaux de transmission par fibres optiques et concerne plus particulièrement une méthode dynamique d'insertion de données aux noeuds d'un réseau de transmission par fibres optiques.

Depuis de nombreuses années, les opérateurs de réseaux investissent dans le transport de l'information sous forme optique en raison des avantages inhérents au mode de transmission par fibres optiques. Ceci est dû au fait que les fibres ont vu leur capacité de transport augmentée dans des proportions considérables grâce à l'adoption d'une technique connue sous l'acronyme de DWDM pour 'Dense Wavelength Division Multiplexing'. Cette technique permet en effet de transmettre des longueurs d'ondes différentes et donc de multiplier le nombre de canaux de transmission, complètement indépendants, dans une même fibre physique. Des dizaines, voire des centaines de longueurs d'ondes, peuvent ainsi être combinées et transportées dans un même milieu de propagation permettant de répondre au formidable accroissement de la demande de bande passante résultant du développement d'Internet et de tous les réseaux de transport de données publics et privés.

La fonction essentielle dans un réseau de communication est donc, à travers les noeuds du réseau, souvent nombreux, de pouvoir diriger et orienter les flots d'informations à transporter vers leur destination finale. Un dispositif clé à un noeud de réseau est alors un commutateur tel qu'un OXC (Optical Xcross Connect) ou un multiplexeur d'insertion et d'extraction optique . Son but est, comme le nom le suggère, de pouvoir extraire et insérer, en mode optique, le trafic local (par exemple, point d'entrée et de sortie d'un réseau secondaire) alors que le reste du trafic est transmis, inchangé, vers sa destination finale à travers d'autres noeuds du réseau. Bien entendu, cette fonction d'insertion et d'extraction doit pouvoir se faire essentiellement en mode optique pour éviter d'avoir recours aux circuits électriques de l'électronique traditionnelle, ce qui impliquerait l'utilisation de coûteux convertisseurs optoélectroniques. La technique de circuit optique consiste à ce qu'au moins une longueur d'onde porteuse de l'information locale soit entièrement réservée aux communications entre deux noeuds d'un réseau. Elle peut ainsi être dérivée et insérée optiquement aux noeuds considérés. Cette façon de faire présente cependant l'inconvénient majeur que la bande passante correspondant à la longueur d'onde ainsi réservée ne peut être utilisée que par les noeuds en question. Une connexion fixe, un chemin, est de fait établi entre ceux-ci. S'ils n'utilisent pas pleinement la bande passante correspondante, ce qui est le cas en général puisque cette dernière doit être adaptée au trafic de pointe, la bande passante inutilisée est perdue alors même qu'elle pourrait servir au transport de données entre d'autres noeuds du réseau. La granularité d'utilisation de la bande passante est donc celle d'une longueur d'onde. Par ailleurs cette méthode suppose implicitement l'utilisation d'un grand nombre de longueur d'ondes, où la limitation de la taille maximale d'un réseau à une dizaine voire à quelques dizaines de noeuds, puisque le nombre de connexions à réaliser croît comme le carré du nombre de noeuds composant celui-ci.

Une meilleure utilisation de la bande passante globale peut être obtenue avec une autre technique, plus complexe, et désignée par l'acronyme OBS pour 'Optical Burst Switching'. Cette technique consiste pour l'essentiel à échanger les données entre noeuds du réseau sous forme de salves (burst) de données. Les noeuds du réseau doivent donc être reconfigurés pour la durée des salves. Les longueurs d'onde disponibles peuvent être ainsi mieux utilisées puisqu'elles ne sont plus attribuées d'une façon fixe à une paire de noeuds. La granularité des échanges d'information devient celle des salves. Ce type de réseau suppose implicitement l'utilisation de commutateurs optiques qui sont relativement lents à reconfigurer ce qui entraîne que les salves doivent être de longue durée au regard de la durée des paquets de données à échanger, pour que le système ait une efficacité suffisante. Ceci amène à devoir regrouper un nombre suffisant de ces paquets de données pour former une salve. Ceci entraîne le plus souvent une latence importance dans la transmission des données entre noeuds ou, à nouveau, une sous-utilisation des salves donc de la bande passante globale. On doit noter par ailleurs que, comme dans l'attribution fixe de longueurs d'ondes, les noeuds intermédiaires ne peuvent ni insérer ni extraire de données dans les salves circulants entre deux noeuds.

C'est pourquoi le but de l'invention est de réaliser une méthode permettant d'insérer à la volée à chaque noeud d'un réseau de transmission par fibres optiques, des données générées localement lorsque toute la bande passante vers un noeud destination donné n'a pas été entièrement utilisée, comme décrit dans le document WO0169834.

L'invention concerne donc une méthode dynamique d'insertion de données aux noeuds d'un réseau de transmission par fibres optiques comprenant au moins un noeud source, un noeud de destination et une pluralité de noeuds intermédiaires, les noeuds étant reliés par une liaison à fibres optiques. La méthode comprend les étapes consistant à :
a. créer une ressource optique (longueur d'onde, macro-slot ou macro-paquet) dans le noeud source, ladite ressource comportant des parties contenant des paquets de données à destination dudit noeud de destination et des parties libres susceptibles d'être occupées par des paquets fournis par chacun desdits noeuds intermédiaires,
b. détecter, lorsque ladite ressource transite par un noeud intermédiaire, si ladite ressource comprend des parties libres lorsque ledit noeud intermédiaire a au moins un paquet de données à transmettre, et
c. ajouter ledit paquet de données dans une partie libre de la ressource lorsque ladite partie libre peut contenir ledit paquet de données ;

Selon l'invention, lesdits paquets de données ont le même noeud de destination que ladite ressource.

Selon un premier mode de réalisation, ce procédé est caractérisé en ce que :
- l'étape b) consiste à détecter l'absence de signal optique ; et
- l'étape c) consiste à transmettre sur le réseau ledit paquet de données lorsque l'étape b) a permis de détecter une absence du signal optique pendant un temps correspondant à au moins le temps dudit paquet de données.

Selon un second mode de réalisation, ce procédé est caractérisé en ce que :
- ladite ressource optique est un macro-paquet comprenant un en-tête pour au moins déterminer la destination dudit macro-paquet, et des paquets de données fournis à chacun desdits noeuds intermédiaires ;
- et l'étape b) consiste à déterminer les parties libres dudit macro-paquet en analysant le contenu dudit en-tête.

Les deux modes de réalisation ainsi caractérisés permettent d'insérer un paquet de données dans un macro-paquet de données sans qu'il soit nécessaire d'analyser individuellement les paquets déjà contenus dans ce macro-paquet, grâce au fait que les places libres sont détectées soit par une simple détection continue de la puissance de la ressource optique, soit par une simple analyse de l'en-tête du macro-paquet lui-même.

Les buts, objets et caractéristiques de l'invention apparaîtront plus clairement à la lecture de la description qui suit faite en référence aux dessins dans lesquels :
- la figure 1 est un bloc-diagramme schématique d'une partie d'un réseau à fibres optiques mettant en oeuvre la méthode selon l'invention.
- la figure 2 est un diagramme représentant l'insertion des paquets de données dans la trame optique transitant dans le réseau illustré sur la figure 1,
- la figure 3 est un bloc-diagramme représentant un dispositif d'insertion optique de données dans la ressource optique se trouvant à l'interface d'un noeud intermédiaire, la figure 4 est un organigramme représentant les étapes effectuées dans le dispositif illustré sur la figure 3,
- la figure 5 est un bloc-diagramme représentant un dispositif d'insertion électronique de données dans la trame se trouvant à l'interface d'un noeud intermédiaire,
- la figure 6 est un diagramme représentant schématiquement l'insertion de paquets de données dans un macro-slot de taille fixe,
- la figure 7 est un diagramme représentant schématiquement l'insertion de paquets de données dans un macro-slot de taille variable,
- la figure 8 est un diagramme représentant schématiquement l'insertion de paquets de données dans un macro-slot de taille variable où l'en-tête et les éléments de données sont séparés par des bandes de garde, et
- la figure 9 est un bloc-diagramme représentant un dispositif mixte d'insertion optique et électronique de données dans la trame se trouvant à l'interface d'un noeud intermédiaire.

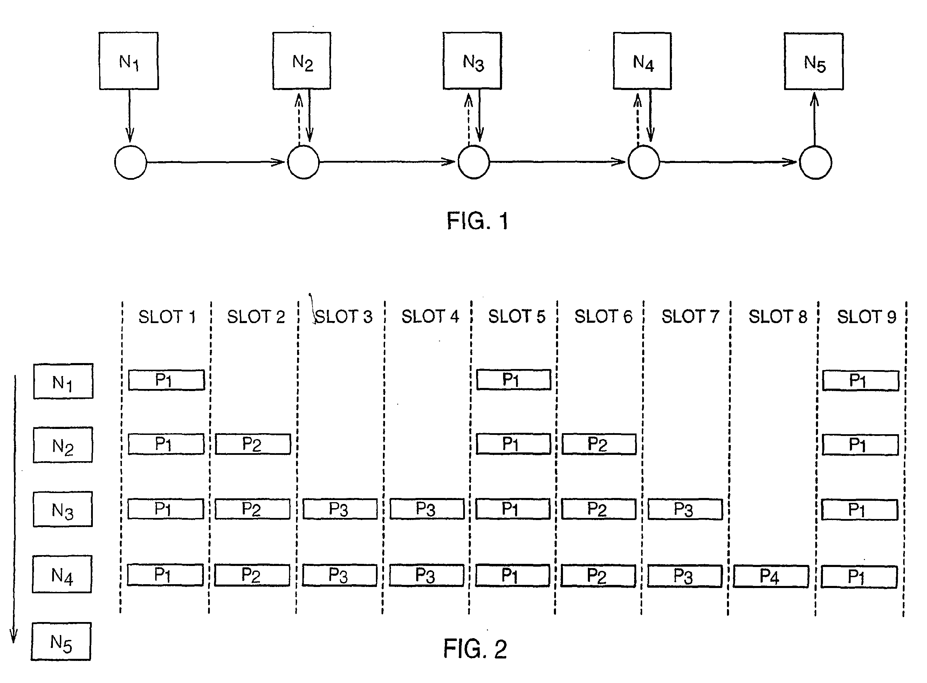

En référence à la figure 1, un réseau de transmission de données par fibres optiques est illustré entre un noeud source N1 et un noeud de destination N5 en passant par trois noeuds intermédiaires N2, N3 et N4. Au noeud source N1, des données sont introduites dans une ressource optique à l'interface du noeud N1. Conformément à l'invention, à l'interface de chaque noeud intermédiaire N2, N3 ou N4, des données sont insérées à la volée si toute la bande passante n'a pas été entièrement utilisée. Enfin, les données qui sont destinées au noeud de destination N5 sont extraites à l'interface du noeud N5.

En supposant que les données se présentent sous forme de paquets, ce qui est généralement le cas, la figure 2 est un exemple illustrant les insertions de paquets de données par les noeuds intermédiaires. A noter que, pour simplifier la figure, les paquets émis dans les parties libres de la ressource sont des slots correspondant à des paquets de taille fixe. Toutefois, le même principe s'applique dans le cas de paquets de taille variable comme décrit plus loin.

Les paquets sont désignés par Px avec x désignant le numéro de noeud intermédiaire. Au noeud source N1, trois slots sont remplis, les slots 1, 5 et 9. Au noeud intermédiaire N2, des paquets de données sont insérés dans les slots libres 2 et 6. Au noeud intermédiaire N3, trois paquets sont de nouveau insérés dans les slots encore libres 3, 4 et 7. Enfin, au noeud intermédiaire N4, un seul paquet peut être inséré dans le dernier slot libre 8, même si N4 a plusieurs paquets à transmettre.

Différentes implémentations sont utilisées pour effectuer cette insertion de paquets de données dans les espaces libres d'un flux optique selon la granularité de la ressource optique commutée dans les noeuds, la structure des paquets ou des slots insérés et des variantes de traitement optiques et numériques sont proposées comme techniques de réalisation de l'invention. Dans toutes ces implémentations, un paquet inséré est en général constitué d'un en-tête et d'une zone de « données ». Dans le cas d'un macro-paquet, il faudra d'une part lire l'en-tête du macro-paquet (taille fixe ou variable) pour connaître sa destination, puis voir si il y a de la place libre pour insérer un nouveau paquet allant vers cette même destination. Il faut noter que pour obtenir une commutation optique à haut débit et efficace, les informations de routage dans l'en-tête d'adresse des macro-paquets ou macro-slots doivent être analysées rapidement. La méthode classique est d'avoir une reconnaissance d'en-tête électronique, mais il est également possible d'utiliser une reconnaissance optique. Une méthode est d'utiliser une densité d'information réduite pour le codage optique des en-têtes de paquets de type macro-slots. Ceci permet de faciliter le décodage, l'interprétation, la modification et la régénération du nouvel en-tête dans la longueur d'onde voulue.

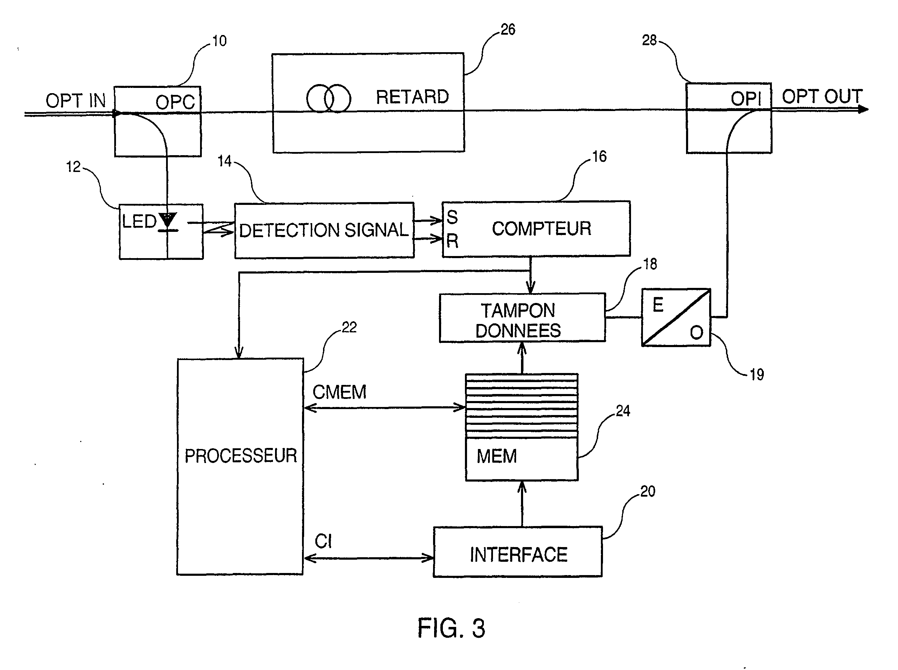

La figure 3 montre une implémentation d'un dispositif de détection optique d'un espace libre pour y insérer des données se trouvant à l'interface d'un noeud intermédiaire avec le réseau de transmission. Ceci correspond soit à une commutation de circuit optique soit à une commutation de macro-slot temporel, pour lesquelles le routage est prédéterminé et donc aucune lecture d'en-tête n'est nécessaire pour connaître la destination finale de la ressource optique (longueur d'onde ou macro-slot temporel) et une simple analyse des parties libres est nécessaire. A noter que des paquets de taille fixe ou variable peuvent être utilisés.

Il convient, dans un système purement optique, tel qu'illustré sur la figure 3, de détecter tout d'abord les absences de transmission de signal sur le signal optique d'entrée du noeud considéré OPTIN afin d'insérer des signaux dans les espaces libres. On prélève donc sur ce signal optique d'entrée une petite partie du signal optique grâce à un coupleur de prélèvement OPC (Optique Coupleur) 10 qui envoie cette partie de signal optique sur une photodiode 12 qui, couplée à un détecteur de puissance de signal 14, indique la présence ou non de signal optique. Le mécanisme revient à mesurer la puissance du signal reçu. En l'absence de signal, la ressource optique est libre et on peut utiliser l'espace libre et ainsi générer un paquet optique correspondant à une durée inférieure à la durée de cet espace libre : la longueur du paquet doit être inférieure ou égale à cet espace libre moins les deux espaces de sécurité appelés aussi bandes de garde.

Un compteur de temps 16 est démarré par un détecteur de signal 14 dès que ce dernier détecte une absence de signal. Le compteur de temps a une capacité correspondant à la taille d'un paquet à insérer et délivre un signal « enable » à une mémoire tampon de données 18 à moins qu'il ne soit remis à zéro par le détecteur de signal 14 avant d'avoir atteint sa limite. Cet exemple d'implémentation pour l'insertion d'un paquet fixe peut être amélioré pour l'insertion d'un paquet variable.

Les données à insérer dans l'espace libre de la trame sont fournies par une interface 20 sous contrôle d'un processeur 22 et au moyen du signal de contrôle CI qui les emmagasine dans une mémoire 24, elle-même gérée par un signal de contrôle CMEM de façon à pouvoir effectuer des lectures et écritures.

Une ligne à retard 26 correspondant au temps d'analyse et de traitement est nécessaire pour insérer le paquet au bon endroit. Cette ligne à retard se place sur le chemin optique principal, avant son entrée dans le dispositif d'insertion où ce signal et celui créé localement pour la transmission du paquet inséré seront mélangés. Elle sert comme l'indique son nom à retarder le signal principal du temps d'analyse de l'espace libre et doit donc avoir comme valeur le temps d'insertion d'un paquet avec une marge correspondant à la bande de garde. Dans le schéma proposé, l'insertion est réalisée par un coupleur d'insertion OPI (OPtique Insertion) 28 après conversion des données se trouvant dans la mémoire tampon de données 18 par le convertisseur électronique-optique 19. Le signal de sortie OPT OUT peut être le signal d'entrée vers une matrice de commutation globale du noeud ou le signal de sortie du noeud dans une implémentation à une seule longueur d'onde.

On peut distinguer deux implémentations possibles à ce niveau : l'insertion de paquets de longueur variable quel que soit l'espace disponible avec bien sûr un minimum et un maximum, et l'insertion de paquets de longueur fixe lorsque l'espace libre est suffisant. La première implémentation optimise la bande passante alors que la deuxième simplifie l'implémentation. Si on veut insérer un paquet fixe, le retard optique est de taille fixe et correspond à la taille du paquet à insérer plus le temps de traitement ainsi qu'une marge correspondant aux bandes de garde. Ensuite il faut attendre que le compteur atteigne la taille du paquet pour libérer l'insertion, comme décrit plus loin. Si on veut insérer un paquet variable, le retard optique correspond à la taille maximum du paquet à insérer auquel on ajoute comme précédemment le temps de traitement et les bandes de garde. Ensuite il faut que l'information du compteur soit corrélée à celle de la taille du paquet chargé dans la mémoire tampon pour assurer que l'espace libre est assez grand par rapport a la taille du paquet a émettre.

La figure 3 représente l'implémentation simple du cas fixe. L'adaptation de cette solution pour différentes tailles de paquets est à la portée de l'homme du métier.

Le mécanisme qui vient d'être décrit peut s'appliquer avec une ou plusieurs longueurs d'onde utilisées dans le réseau optique. Il suffit en effet de reproduire le dispositif de la figure 3 pour chaque longueur d'onde de manière indépendante.

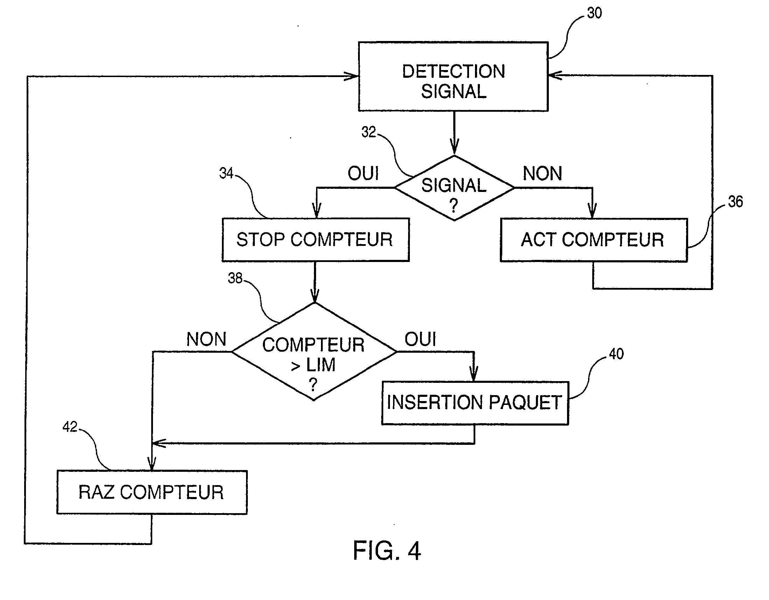

Le processus de détection d'espace libre et de traitement mis en oeuvre dans le dispositif de la figure 3 est illustré par l'organigramme de la figure 4. Le point de départ du processus est la détection de changement d'état du signal 30. Un choix est fait en 32 selon qu'il y a du signal, ce qui stoppe le compteur en 34 ou active le compteur en 36. Lorsque le compteur est activé, on retourne en attente de changement d'état du signal en 30. Après que le compteur aura été arrêté en 34 on regarde en 38 si sa valeur atteinte est supérieure à la valeur limite LIM qui permet de procéder à l'insertion d'un paquet en 40. On remet ensuite le compteur à zéro en 42 et on retourne à l'état d'attente 30. Sinon, si la limite n'est pas atteinte, on remet seulement le compteur à zéro et on retourne en 30. Dans le cas de paquet de taille variable, on procède de la même manière avec une valeur limite variable fixée par la taille du paquet présent dans la mémoire tampon.

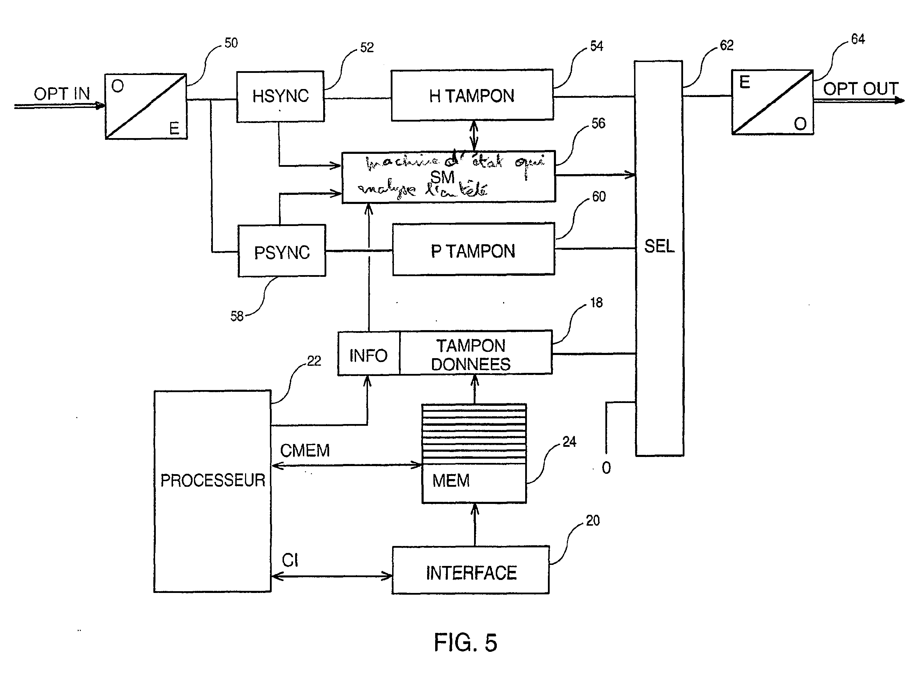

Une alternative au dispositif tout optique de la figure 3 est de convertir le signal optique d'entrée en un signal électrique dans un convertisseur 50 illustré sur la figure 5. Ceci correspond au traitement d'un macro-slot comprenant un en-tête pour le routage. Ce signal est transmis à deux sous-systèmes: un mécanisme de détection et de traitement de l'en-tête du macro-paquet et un mécanisme détection et de traitement de la partie « données » du macro-paquet. Les paquets ou macro-slots utilisables dans un tel environnement sont de taille fixe de préférence mais peuvent être des paquets ou macro-slots de taille variable avec éventuellement insertion de bande de garde entre les éléments du macro-slot tel que décrit plus loin.

Le sous-système d'en-tête est constitué dans ce mode de réalisation d'un synchronisateur d'en-tête HSYNC 52 qui permet d'extraire du flux la partie en-tête qui est stocké dans une mémoire tampon 54, qui est sous le contrôle d'une machine d'état SM 56 qui peut lire et écrire certains champs de l'en-tête. Ainsi la machine d'état détermine en analysant l'en-tête si la trame comporte des parties libres.

Le mode de réalisation proposé est un système transmettant tous ses paquets vers une destination unique et n'insérant donc ses données que lorsque le macro-slot a comme destination l'adresse correspondant au paquet à insérer. Il est clair que l'homme de l'art saura ajouter le nombre de mémoires tampons nécessaires (une par destination) et sélectionner la mémoire tampon en fonction de l'adresse contenue dans l'en-tête du macro-slot.

Le sous-système de données est constitué d'un synchronisateur du champ de données PSYNC 58 qui permet d'extraire du flux 1a partie données qui est stockée dans une mémoire tampon de transit 60, sous le contrôle de la machine d'état SM 56 qui peut écrire certains champs dans cette mémoire et notamment ajouter des données à celles existantes.

Comme précédemment, on trouve aussi dans ce mode de réalisation proposé une partie préparation et mise en mémoire tampon 18 des données à ajouter au paquet. Les données sont fournies par l'interface 20 sous contrôle du processeur 22 par un ensemble de signaux de contrôle CI qui les stocke dans une mémoire 24, elle-même gérée par un système de contrôle CMEM, ceci afin de pouvoir effectuer notamment des lectures et écritures. Les données les plus urgentes à transmettre sont transférées de la mémoire 24 vers le tampon de données 18 par le processeur de paquets 22 qui, en outre, définit un champ d'information INFO associé au contenu du tampon qui peut être lu par la machine d'état SM 56 afin de modifier le champ d'en-tête. Les informations peuvent être par exemple la longueur du tampon (s'il est variable) et la destination des données. La longueur des données à transmettre est aussi utile pour le temps de sélection du tampon 18 lors de la transmission. L'exemple de réalisation ne concerne que les macro-paquets de taille fixe. Dans le cas où les macro-paquets sont de taille variable, il faut rajouter un mécanisme de détection d'espace libre comme celui décrit précédemment. Lorsque l'en-tête est modifié, la machine d'état procède à la transmission du macro-paquet modifié, à savoir la transmission en premier du nouvel en-tête situé dans HTAMPON 54 grâce à une sélection appropriée sur le sélecteur SEL 62, puis enchaîne par la transmission des données contenues dans PTAMPON 60 par une autre valeur de sélection de SEL 62 et termine enfin par la transmission des données emmagasinées dans la mémoire tampon de données 18. Pour finir, un convertisseur électrique vers optique 64 est utilisé pour retourner dans l'environnement optique.

A noter que l'on pourrait envisager l'alternative toute électronique à la figure 3 en simplifiant simplement la figure 5. Il suffit pour cela d'enlever la partie de traitement d'en-tête, de garder le convertisseur O/E 50, le tampon de transit 60 pour les données d'origine, la mémoire tampon de données 18 pour les données a insérer et le sélecteur 62. Dans ce cas, le tampon des données à insérer est sélectionné lorsque la mémoire tampon de transit est vide, et on sert alors tout le paquet a insérer. Si un autre paquet en transit arrive, il est mémorisé jusqu'à la fin de service du paquet a insérer, puis est servi ensuite...

A noter également que ce mécanisme peut aussi bien concaténer ces différents champs ou bien insérer des espaces libres ce qui correspond à l'insertion de zéros au niveau du sélecteur SEL 62. Ainsi, cette implémentation s'adapte à toutes les structures de paquets telles que décrites à savoir de longueur fixe ou variable, avec ou sans bande de garde entre en-tête et données, avec ou sans bande de garde entre des zones de données différentes. C'est l'avantage d'une structure tout électronique dans la manipulation des champs.

A noter que le processus de détection d'espace libre et de traitement comporte, dans le mode de réalisation illustré sur la figure 5, à peu près les mêmes étapes que dans le mode de réalisation tout optique illustré par l'organigramme de la figure 4 si ce n'est que le traitement étant plus complexe, le compteur est remplacé par une machine d'état qui vérifie que la structure et la taille du paquet permettent l'insertion de données supplémentaires.

Dans le contexte de l'invention, il est utile d'utiliser des trames de grande longueur de façon à réduire la perte due aux bandes de garde. Mais ceci complique le problème d'emmagasinage temporaire des données et nécessite de pouvoir remplir correctement les trames. Une solution consiste à utiliser des macro-slots qui répondent à ces deux contraintes et permettent une optimisation du remplissage d'une fibre optique.

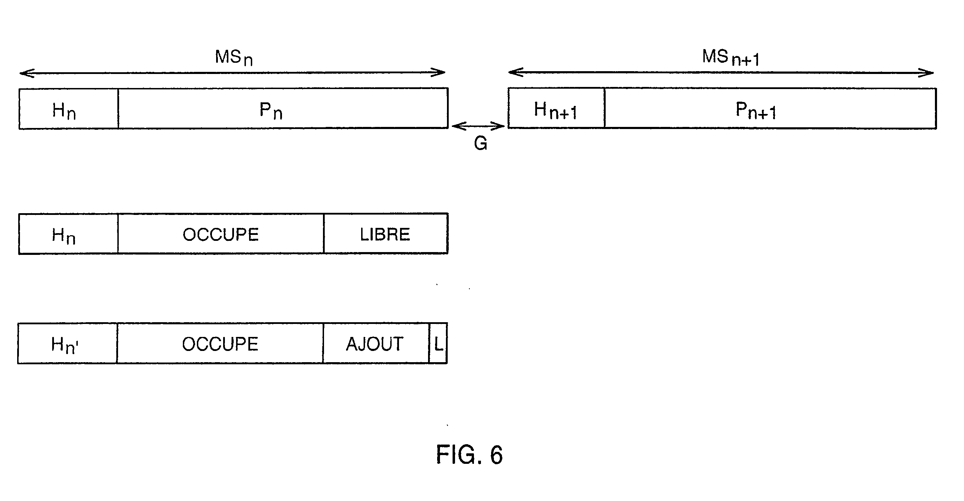

La figure 6 décrit une telle structure de macro-slot MS sans séparation de l'en-tête H et de la partie données P qui convient donc à un traitement électronique tel que celui décrit en figure 5. L'exemple utilisé est un macro-slot de taille fixe. Chaque macro-slot « MSn » est séparé des ses voisins par une bande de garde pour permettre la commutation optique des macro-slots dans les noeuds intermédiaires

Dans le cas où le macro-slot contient une partie libre à la fin des données comme illustré sur la figure, il devient possible d'affecter les ressources libres pour la transmission de données. Les slots libres à l'intérieur du macro-slot peuvent être utilisés par le noeud intermédiaire qui les détecte. L'en-tête du paquet ou du macro-slot Hn doit être modifié en Hn' pour refléter l'ajout de données. Un nouveau champ de données ADD est ajouté à la partie données du macro-slot. Il peut éventuellement subsister encore un espace libre L à la fin du macro-slot utilisable par un autre noeud. L'exemple ne précise pas si les slots à l'intérieur du macro-slot sont de taille fixe ou variable car les deux sont possible.

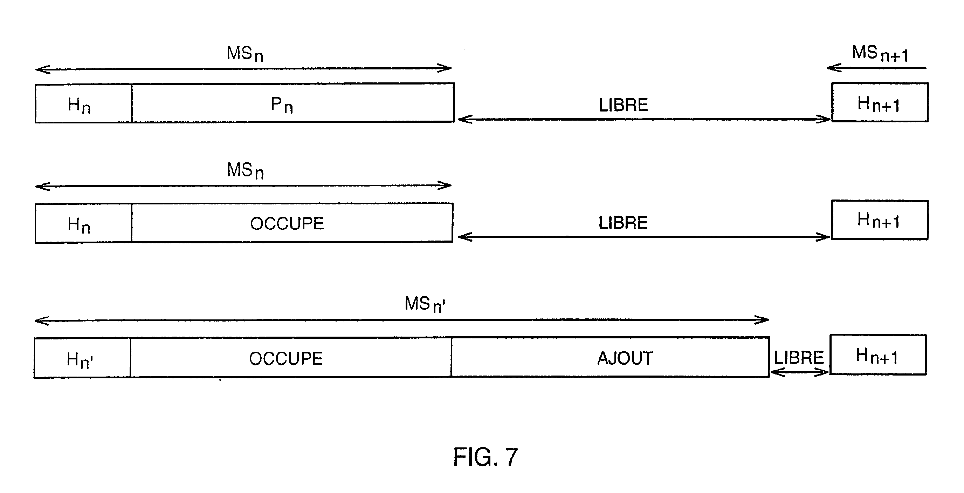

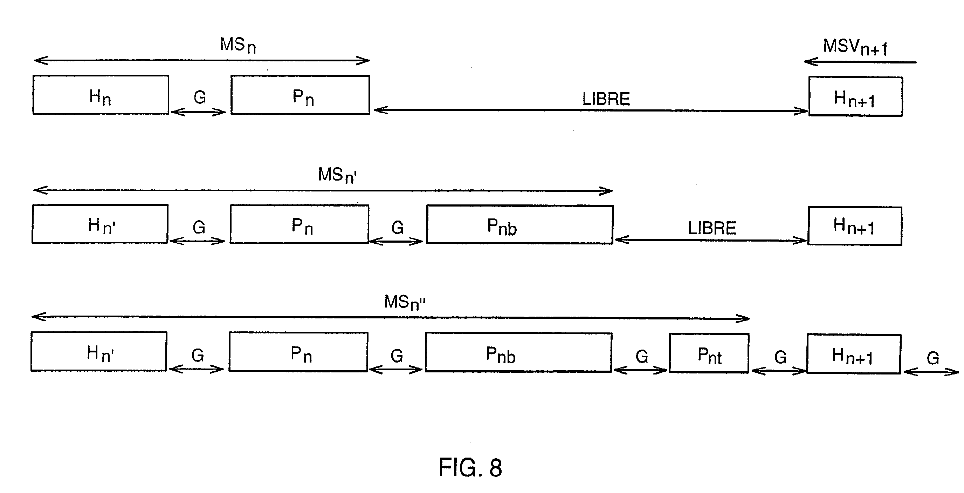

La figure 7 décrit une structure de macro-slot de taille variable, un espace libre séparant le macro-slot MSn du macro-slot MSn+1. Lorsqu'un noeud intermédiaire insère des données ADD au macro-slot, la taille de celui-ci est modifiée et devient MSn'. Comme illustré sur la figure, l'espace libre séparant le nouveau macro-slot du macro-slot suivant est alors réduit. L'avantage de cette structure est de faire varier la taille du macro-slot en fonction de la disponibilité du réseau. Il est par ailleurs nécessaire de propager cette information de nouvelle longueur du macro-paquet au contrôleur du noeud pour assurer une bonne commutation dans la matrice optique. La figure 8 est une autre alternative à l'implémentation de macro-slots. La structure d'un macro-slot dans cette approche sépare toutes les zones d'en-tête global et les éléments de données par des bandes de garde. L'avantage est de pouvoir implémenter une solution mixte optique et électronique pour réaliser la fonction d'insertion ce qui autorise une plus grande vitesse de traitement et commutation.

Un macro-slot de base variable MSn est constitué d'un en-tête Hn et d'un élément de données Pn séparés par une bande de garde. On rajoute un élément de données Pnb dans un noeud intermédiaire ce qui peut impliquer une modification de l'en-tête Hn en Hn'. Il subsiste un espace libre avec le macro-slot qui suit supérieur à une bande de garde. Un noeud ultérieur peut utiliser cet espace libre. Ainsi, un nouvel ajout de données Pnt peut être associé à une nouvelle modification de l'en-tête en Hn''. Dans cette solution les ajouts de données peuvent être de taille quelconque pourvu qu'il reste toujours au moins une bande de garde avec l'entité qui suit sans oublier toutefois qu'il faut borner la taille maximale puisque celle-ci fixe la longueur de la ligne à retard.

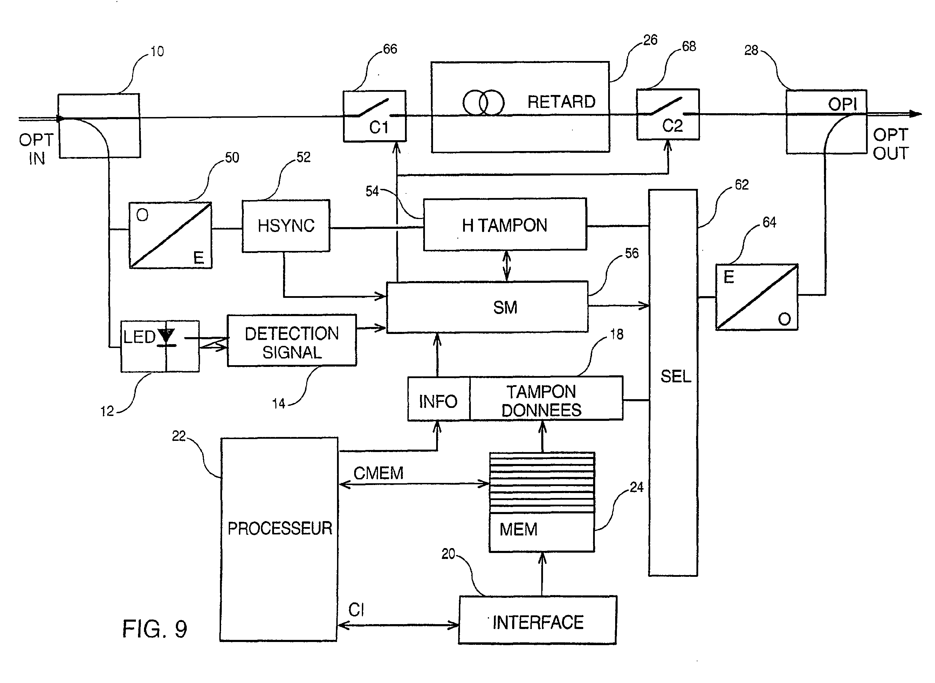

La structure de macro-slot de taille variable illustrée sur la figure 8 peut être utilisée en association avec un dispositif mixte combinant, comme sur la figure 9, le principe du dispositif de traitement optique illustré sur la figure 3 et le principe du dispositif de traitement électronique illustré sur la figure 5. L'en-tête original peut être effacé dans le chemin principal par utilisation d'un commutateur (par exemple une porte optique de type SOA) 66. Pour les données existantes, elles sont conservées dans l'environnement optique par emmagasinage dans la ligne à retard 26 et ré-introduites au bon moment grâce au coupleur 28. Dans ce cas ou l'en-tête est effacé et réécrit par les noeuds intermédiaires, la méthode de détection de puissance optique n'est utile que dans le cas de macro-paquets variables pour détecter l'arrivée du prochain en-tête en avance (délai 26). Dans le cas fixe, étant donné que l'on a par l'en-tête la place occupée dans le macro-paquet et que sa taille est fixe, on connaît tout de suite la taille de la place libre.

Dans le cas où on ne réécrit pas l'en-tête du macro-paquet, on a tout de même besoin de détecter et lire l'en-tête pour déterminer la destination du macro-paquet, mais celui-ci n'est pas modifié par les noeuds intermédiaires. Dans ce cas on n'a pas besoin d'effacer l'en-tête sur le chemin de transit ni d'insérer un nouvel en-tête, mais on doit utiliser la méthode de détection de puissance optique pour s'assurer que la place libre est suffisante pour transmettre le nouveau paquet de données.

De même que dans la figure 5, un tampon de données par destination est utilisée dans le cas de multiple destination.

Pour les données rajoutées au macro-slot, il n'y a pas de données à effacer car l'espace doit être libre mais on utilise le même principe d'insertion électronique décrit en figure 5. Le chemin principal est retardé du temps de traitement de l'en-tête d'une part et le positionnement des données ajoutées se fait au fil de l'eau après détermination de la longueur du macro-slot existant grâce à une détection de signal ou à un décodage de l'en-tête, les données étant déjà prêtes dans la zone tampon 18.

On vérifie donc la possibilité d'agrandir le macro-slot si un espace suffisant existe entre la fin du macro-slot courant et l'en-tête du macro-slot suivant. Pour cela, on prélève donc sur ce signal optique d'entrée une petite partie du signal optique OPTIN grâce au coupleur de prélèvement OPC (Optique Coupleur) 10 qui envoie cette partie de signal optique sur une photodiode 12 qui est couplée à un détecteur de puissance de signal 14 et indique la présence ou non de signal optique. Le mécanisme revient à mesurer la puissance du signal reçu. La présence ou absence de signal est transmise à la machine d'état SM 56 qui gère cet état afin d'autoriser l'ajout de données au macro-slot ou non. A cette détection optique peut se substituer une analyse de l'en-tête qui donne la longueur de ou des éléments de données existant. Par contre pour connaître l'espace libre restant, si les macro-slots ont une taille variable, la détection optique reste la solution la plus simple pour vérifier l'espace libre.

A noter que la machine d'état 56, dans le cas ou l'on réécrit l'en-tête, contrôle le commutateur 66 afin de ne stocker dans la ligne à retard 26 que les données utiles en utilisant les informations de détection de signal 14 ainsi que les informations de l'en-tête.

En parallèle, le décodage d'en-tête est activé grâce au convertisseur d'optique en électronique 50 et au mécanisme de traitement constitué du synchronisateur d'en-tête 52 qui permet d'extraire la partie en-tête qui est ensuite emmagasinée dans la mémoire tampon 54 sous le contrôle de la machine d'état 56.

On trouve aussi dans le mode de réalisation proposé une partie préparation et mise en mémoire tampon 18 des données à ajouter au paquet. Les données sont fournies par l'interface 20 sous contrôle du processeur 22 par un ensemble de signaux de contrôle CI qui les stocke dans une mémoire 24, elle-même gérée par un système de contrôle CMEM. Les données les plus urgentes à transmettre sont transmises de la mémoire 24 vers le tampon de données 18 par le processeur 22 qui, en outre, définit un champ d'information INFO associé au contenu du tampon qui peut être lu par la machine d'état SM 56 afin de modifier le champ d'en-tête. Les informations peuvent être par exemple la longueur du tampon (s'il est variable) et la destination des données. La longueur des données à transmettre est aussi utile pour le temps de sélection du tampon 18 lors de la transmission.

Dans le cas favorable, l'en-tête du macro-slot est modifié et un slot est ajouté au macro-slot contenant les données correspondantes. L'en-tête du macro-slot contient l'information de longueur totale du macro-slot afin de positionner la détection de l'en-tête du paquet suivant. En cas de modification de taille, cette valeur est changée dans l'en-tête. Il faut alors substituer l'en-tête original par ce nouvel en-tête.

Lorsque l'en-tête est modifié, la machine d'état procède à la transmission du paquet modifié à savoir la transmission en premier du nouvel en-tête situé dans HTAMPON 54 grâce à une sélection appropriée sur le sélecteur SEL 62, de façon a ce que le nouvel en-tête soit introduit juste avant l'arrivée des données retardées par la ligne a retard 26 grâce au coupleur 28 (en maintenant la bande de garde entre l'en-tête et le premier paquet de données du macro-paquet) et termine enfin par la transmission des données en mémoire tampon 18 et de nouveau le HTAMPON 54 grâce à une sélection appropriée sur le sélecteur SEL 62. Pour les éléments provenant du sélecteur 62, un convertisseur électrique vers optique 64 est utilisé pour retourner dans l'environnement optique. Le coupleur optique 28 qui suit peut aussi être remplacé par une matrice de commutation en cas de réécriture de l'en-tête. A noter qu'au lieu d'utiliser le SOA, on pourrait alors utiliser un commutateur rapide 2x1, une voie d'entrée servant a introduire les nouvelles données - en-tête (l'ancien en-tête est alors dans le même temps bloqué) et de nouveau(x) paquet(s) - et l'autre voie d'entrée servant a laisser passer de façon transparente les « anciens » paquets du macro-paquet. Dans ce mode de réalisation, comme dans le mode de réalisation optique illustré sur la figure 3, un espace de sécurité ou bande de garde est à conserver entre l'en-tête et les données du macro-slot correspondant en plus des bandes de garde habituelles entre paquets. Il en est de même pour l'ajout de l'élément de données au macro-slot: Une bande de garde est nécessaire avec le macro-slot original pour éviter toute contention au moment de l'insertion. Cette bande de garde est constituée de zéros, et afin de mieux identifier chaque élément du macro-slot, un en-tête spécifique à chaque élément de données est utilisé et comprend en outre une partie identifiant le macro-slot auquel cet élément appartient.

## Revendications

1. Méthode dynamique d'insertion de données aux noeuds d'un réseau de transmission par fibres optiques, ledit réseau comprenant au moins un noeud source, un noeud de destination et une pluralité de noeuds intermédiaires, lesdits noeuds étant reliés par une liaison à fibres optiques, comprenant les étapes suivantes :
a) on crée une ressource optique dans le noeud source, ladite ressource comportant des parties contenant des paquets de données à destination dudit noeud de destination et des parties libres susceptibles d'être occupées par des paquets fournis par chacun desdits noeuds intermédiaires,
b) on détecte si ladite ressource comprend des parties libres lorsque ladite ressource transite par un noeud intermédiaire, qui a au moins un paquet de données à transmettre, et
c) on ajoute ledit paquet de données dans une partie libre de ladite ressource lorsque ladite partie libre peut contenir ledit paquet de données,
**caractérisée en ce que** lesdits paquets de données ont le même noeud de destination que ladite ressource.

2. Méthode selon la revendication 1, dans laquelle
- l'étape b) consiste à détecter l'absence de signal optique, et
- l'étape c) consiste à transmettre sur le réseau ledit paquet de données lorsque l'étape b) a permis de détecter une absence du signal optique pendant un temps correspondant à au moins le temps dudit paquet de données.

3. Méthode selon la revendication 2, dans laquelle les signaux optiques de données reçus par ledit noeud intermédiaire sont retardés dans une ligne à retard pendant un temps correspondant au temps d'analyse et de traitement de ladite partie prélevée du signal optique.

4. Méthode selon la revendication 2, dans laquelle l'étape b) comprend les étapes suivantes :
b1) convertir le signal optique reçu par ledit noeud intermédiaire en un signal électronique,
b2) extraire les données d'origine de ladite ressource optique convertie en un signal électronique, et emmagasiner lesdites données dans une mémoire tampon de transit, et
b3) détecter l'absence de signal électronique lorsque ladite mémoire tampon de transit est vide.

5. Méthode selon la revendication 1, comprenant les étapes suivantes :
a) créer une ressource optique dans le noeud source, ladite ressource comportant des parties contenant des paquets de données à destination dudit noeud de destination et des parties libres susceptibles d'être occupées par des paquets fournis par chacun desdits noeuds intermédiaires,
b) détecter, lorsque ladite ressource transite par un noeud intermédiaire, si ladite ressource comprend des parties libres lorsque ledit noeud intermédiaire a au moins un paquet de données à transmettre, et
c) ajouter ledit paquet de données dans une partie libre de la ressource lorsque ladite partie libre peut contenir ledit paquet de données,
**caractérisée en ce que** :
- ladite ressource optique est un macro-paquet comprenant un en-tête pour au moins déterminer la destination dudit macro-paquet et des paquets de données fournis à chacun desdits noeuds intermédiaires,
- et l'étape b) consiste à déterminer les parties libres dudit macro-paquet en analysant le contenu dudit en-tête.

6. Méthode selon la revendication 5, dans laquelle l'étape b) comprend les étapes suivantes :
b1) convertir le signal optique reçu par ledit noeud intermédiaire en un signal électronique porteur dudit macro-paquet,
b2) extraire l'en-tête dudit macro-paquet et emmagasiner ledit en-tête dans une mémoire tampon d'en-tête,
b3) extraire les données d'origine dudit macro-paquet, et emmagasiner lesdites données dans une mémoire tampon de transit, et
b4) analyser l'en-tête par une machine d'état de façon à déterminer si ledit macro-paquet comporte une partie libre suffisante pour y insérer ledit paquet de données.

7. Méthode selon la revendication 5, dans laquelle l'étape b) comprend les étapes suivantes :
b1) convertir le signal optique reçu par ledit noeud intermédiaire en un signal électronique porteur dudit macro-paquet,
b2) extraire l'en-tête dudit macro-paquet et emmagasiner ledit en-tête dans une mémoire tampon d'en-tête,
b3) extraire les données d'origine dudit macro-paquet, et emmagasiner lesdites données dans une mémoire tampon de transit, et
b3) mesurer dans ladite mémoire tampon de transit l'absence de signal de données ou mesurer la durée écoulée avant l'arrivée d'un nouvel en-tête de façon à déterminer si ledit macro-paquet comporte une partie libre suffisante pour y insérer ledit paquet de données.

8. Méthode selon la revendication 5, dans laquelle l'étape c) comprend les étapes suivantes:
c1) modifier ledit en-tête emmagasiné en mémoire tampon en fonction dudit paquet de données à insérer dans la macro-paquet,
c2) transmettre un nouveau macro-paquet sous le contrôle de ladite machine d'état, ledit nouveau macro-paquet comprenant ledit en-tête modifié, lesdites données d'origine et ledit paquet de données qui avait été préalablement emmagasinées dans une mémoire tampon de données, et
c3) convertir ledit nouveau macro-paquet en un signal optique à transmettre sur le réseau.

9. Méthode selon la revendication 5, dans laquelle l'étape c) comprend les étapes suivantes :
c1) modifier ledit en-tête emmagasiné en mémoire tampon de transit en fonction dudit paquet de données à insérer dans le macro-paquet,
c2) effacer l'en-tête d'origine a l'aide d'un commutateur situe en amont ou en aval de la dite ligne a retard
c3) reconstruire un nouveau macro-paquet sous le contrôle de ladite machine d'état, ledit nouveau macro-paquet résultant de la reconstruction dudit en-tête modifié, desdites données d'origine retardées par le délai créé par ladite ligne a retard optique et dudit paquet de données qui avait été préalablement emmagasiné dans la mémoire tampon de données.

10. Méthode selon la revendication 5, dans laquelle les parties libres dudit macro-paquet sont analysées simplement au cours de l'étape b) consistant à :
b1) prélever une partie du signal optique reçu par ledit noeud intermédiaire au moyen d'un coupleur de prélèvement (OPC), de façon à convertir cette dite partie en signal électronique, l'autre partie du signal restant dans le domaine optique
b2) extraire l'en-tête dudit macro-paquet porté par ledit signal électronique, et emmagasiner ledit en-tête dans une mémoire tampon d'en-tête,
b3) analyser l'en-tête par une machine d'état de façon à déterminer la destination dudit macro-paquet.
b4) mesurer sur ladite partie de signal prélevée la durée pendant laquelle il y a absence de signal de façon à déterminer la durée maximale du paquet de données à insérer.

11. Méthode selon la revendication 10, dans laquelle ladite partie du signal optique restée dans le domaine optique est retardée dans une ligne à retard pendant un temps correspondant au temps d'analyse et de traitement de ladite partie prélevée du signal optique.

12. Méthode selon la revendication 10, dans laquelle l'étape c) consiste à transmettre sur le réseau ledit paquet de données qui a été préalablement emmagasiné en mémoire tampon de données lorsque l'étape b) a permis de détecter une absence de signal optique pendant un temps correspondant à au moins le temps dudit paquet de données.

13. Système comprenant des moyens adaptés pour mettre en oeuvre les étapes de la méthode selon l'une des revendications précédentes.

## Claims

1. Dynamic method of adding data at the nodes of a fibre optic transmission network comprising at least one source node, one destination node and a plurality of intermediate nodes, said nodes being connected by a fibre optic connection, said method comprising the following steps:
a) creating at the source node an optical resource comprising portions containing data packets addressed to said destination node and free portions that may be occupied by packets supplied by each of said intermediate nodes,
b) when said resource transits an intermediate node, detecting if said resource comprises free portions if said intermediate node has at least one data packet to transmit, and
c) adding said data packet to a free portion of said resource if said free portion may contain said data packet,
which method is **characterised in that** said data packets have the some destination node as said resource.

2. Method according to claim 1, wherein
- the step b) consists in detecting the absence of optical signals; and
- the step c) consists in transmitting said data packet over the network if the step b) has detected absence of any optical signal for a time corresponding at least to the time of said data packet.

3. Method according to claim 2, wherein the optical data signals received by said intermediate node are delayed by a delay line for a time corresponding to the time needed to analyze and process said sampled portion of the optical signal.

4. Method according to claim 2, wherein the step b) comprises the following steps:
b1) converting the optical signal received by said intermediate node into an electronic signal,
b2) extracting the original data from said optical resource converted into on electronic signal and storing said data in a transit buffer memory, and
b3) detecting the absence of electronic signals if said transit buffer memory is empty.

5. Method according to claim 1 comprising the following steps:
a) creating at the source node an optical resource comprising portions containing data packets addressed to said destination node and free portions that may be occupied by packets supplied by each of said intermediate nodes,
b) when said resource transits an intermediate node, detecting if said resource comprises free portions if said intermediate node has at least one data packet to transmit, and
c) adding said data packet to a free portion of the resource if said free portion may contain said data packet, which method is **characterized in that**:
- said optical resource is a macropacket comprising a header for at least determining the destination of said macropacket and data pockets supplied at each of said intermediate nodes; and
- the step b) consists in determining the free portions of said macropacket by analyzing the content of said header.

6. Method according to claim 5, wherein the step b) comprises the following steps:
b1) converting the optical signal received by said intermediate node into an electronic signal bearing said macropacket,
b2) extracting the header of said macropacket and storing said header in a header buffer memory,
b3) extracting the original data from said macropacket und storing said data in a transit buffer memory, and
b4) analyzing the header by means of a state machine to determine if said macropacket comprises a free portion sufficient for addition thereto of said data packet.

7. Method according to claim 5, wherein the step b) comprises the following steps:
b1) converting the optical signal received by said intermediate node into an electronic signal bearing said matropacket,
b2) extracting the header of said macropacket and storing said header in a header buffer memory,
b3) extracting the original data from said macropacket and storing said data in a transit buffer memory, and
b4) measuring in said transit buffer memory the absence of data signals or measuring the time elapsed before the arrival of a new header to determine if said macropocket comprises a free portion sufficient for addition thereto of said data packet.

8. Method according to claim 5, wherein the step c) comprises the following steps:
c1) modifying said header stored in buffer memory as a function of said data packet to be added to the macropacket,
c2) transmitting, under the control of said state machine, a new macropacket comprising said modified header, said original data and said data packet that was previously stored in a data buffer memory, and
c3) converting said new macropacket into an optical signal to be transmitted over the network.

9. Method according to claim 5, wherein the step c) comprises the following steps:
c1) modifying said header stored in transit buffer memory as a function of said data packet to be added to the macropocket,
c2) deleting the original header with the aid of a switch situated upstream or downstream of said delay line,
c3) constructing, under the control of said state machine, a new macropacket resulting from the construction of said modified header, said original data delayed by said optical delay line and said data packet that was previously stored in the data buffer memory.

10. Method according to claim 5, wherein the free portions of said macropacket are simply analyzed during the step b) consisting of:
b1) sampling a portion of the optical signal received by said intermediate node by means of a sampling coupler (OPC) to convert said portion into an electronic signal, the other portion of the signal remaining in the optical domain,
b2) extracting the header of said macropacket carried by said electronic signal and storing said header in a header buffer memory,
b3) analyzing the header by means of a state machine to determine the destination of said macropacket, and
b4) to determine the maximum duration of the data packet to be added, measuring in said sampled signal portion the time for which there is absence of signals.

11. Method according to claim 10, wherein said portion of the optical signal remaining in the optical domain is delayed in a delay line for a time corresponding to the time needed to analyze and process said sampled portion of the optical signal.

12. Method according to claim 10, wherein the step c) consists in transmitting over the network said data packet that was previously stored in data buffer memory if the step b) has detected absence of optical signals for a time corresponding at least to the time of said data packet.

13. System comprising means adapted to implement the steps of the method according to any preceding claim.

## Patentansprüche

1. Verfahren zur dynamischen Dateneinfügung in optischen Übertragungsnetzwerkknoten, wobei das Netzwerk mindestens einen Quellkoten, einen Zielknoten und eine Vielzahl von Zwischenknoten umfasst, wobei die Knoten durch eine optische Verbindung verbunden sind, umfassend die folgenden Schritte:
a) man erzeugt eine optische Ressource im Quellknoten, wobei die Ressource Teile umfasst, die für den Zielknoten bestimmte Datenpakete enthalten, sowie freie Teile, die von durch jeden der Zwischenknoten gelieferte Datenpakete belegt werden können;
b) man erkennt, ob die Ressource freie Teile umfasst, wenn die Ressource einen Zweischenknoten durchläuft, der mindestens ein zu übertragendes Datenpaket aufweist; und
c) man fügt das Datenpaket in einen freien Teil der Ressource hinzu, wenn dieser freie Teil das Datenpaket enthalten kann;
**dadurch gekennzeichnet, dass** die Datenpakete denselben Zielknoten haben wie die Ressource.

2. Verfahren nach Anspruch 1, bei dem
- Schritt b) darin besteht, das Fehlen eines optischen Signals zu erkennen; und
- Schritt c) darin besteht, auf dem Netzwerk das Datenpaket zu übertragen, wenn Schritt b) ermöglicht hat, das Fehlen eines optischen Signals während einer Zeit zu erkennen, die mindestens der Zeit des Datenpakets entspricht.

3. Verfahren nach Anspruch 2, bei dem die von dem Zwischenknoten empfangenen optischen Signale in einer Verzögerungsleitung während einer Zeit verzögert werden, die der Analyse- und Verarbeitungszeit des aus dem optischen Signal entnommenen Teils entspricht.

4. Verfahren nach Anspruch 2, bei dem der Schritt b) die folgenden Schritte umfasst:
b1) Konvertieren des von dem Zwischenknoten empfangenen optischen Signals in ein elektronisches Signal;
b2) Extrahieren der Ursprungsdaten der in ein elektronisches Signal umgewandelten optischen Ressource und Speichern dieser Daten in einem Transit-Pufferspeicher; und
b3) Erkennen des Fehlens eines elektronischen Signals, wenn der Transit-Pufferspeicher leer ist.

5. Verfahren nach Anspruch 1, umfassend die folgenden Schritte:
a) Erzeugen einer optischen Ressource im Quellknoten, wobei die Ressource Teile umfasst, die für den Zielknoten bestimmte Datenpakete enthalten, sowie freie Teile, die von durch jeden der Zwischenknoten gelieferte Datenpakete belegt werden können;
b) Erkennen, wenn die Ressource einen Zwischenknoten durchläuft, ob die Ressource freie Teile umfasst, wenn der Zwischenknoten mindestens ein zu übertragendes Datenpaket aufweist; und
c) Hinzufügen des Datenpakets in den freien Teil der Ressource, wenn dieser freie Teil das Datenpaket enthalten kann;
**dadurch gekennzeichnet, dass**:
- die optische Ressource ein Makropaket ist, welches einen Header umfasst, um zumindest das Ziel dieses Makropakets zu bestimmen, sowie an jeden der Zwischenknoten gelieferte Datenpakete;
- und **dadurch**, dass der Schritt b) darin besteht, die freien Teile des Makropakets zu bestimmen, indem der Inhalt des Headers analysiert wird.

6. Verfahren nach Anspruch 5, bei dem der Schritt b) die folgenden Schritte umfasst:
b1) Konvertieren des von dem Zwischenknoten empfangenen optischen Signals in ein elektronisches Signal, das Träger des Makropakets ist;
b2) Extrahieren des Headers des Makropakets und Speichern des Headers in einem Header-Puffer;
b3) Extrahieren der Ursprungsdaten des Makropakets und Speichern dieser Daten in einem Transit-Pufferspeicher; und
b4) Analysieren des Headers durch eine Ablaufsteuereinheit, sodass bestimmt werden kann, ob das Makropaket einen ausreichenden freien Teil aufweist, um darin das Datenpaket einzufügen.

7. Verfahren nach Anspruch 5, bei dem der Schritt b) die folgenden Schritte umfasst:
b1) Konvertieren des von dem Zwischenknoten empfangenen optischen Signals in ein elektronisches Signal, das Träger des Makropakets ist;
b2) Extrahieren des Headers des Makropakets und Speichern des Headers in einem Header-Puffer;
b3) Extrahieren der Ursprungsdaten des Makropakets und Speichern dieser Daten in einem Transit-Pufferspeicher; und
b4) in dem Transit-Pufferspeicher Messen des Fehlens eines Datensignals oder Messen der verstrichenen Dauer vor dem Eintreffen eines neuen Headers, sodass bestimmt werden kann, ob das Makropaket einen ausreichenden freien Teil aufweist, um darin das Datenpaket einzufügen.

8. Verfahren nach Anspruch 5, bei dem der Schritt c) die folgenden Schritte umfasst:
c1) Verändern des im Pufferspeicher gespeicherten Headers in Abhängigkeit von dem in das Makropaket einzufügenden Datenpaket;
c2) Übertragen eines neuen Makropakets unter der Kontrolle der Ablaufsteuereinheit, wobei das neue Makropaket den veränderten Header, die Ursprungsdaten und das Datenpaket umfasst, die zuvor in einem Datenpufferspeicher gespeichert worden waren; und
c3) Konvertieren des neuen Makropakets in ein über das Netzwerk zu übertragendes optisches Signal.

9. Verfahren nach Anspruch 5, bei dem der Schritt c) die folgenden Schritte umfasst:
c1) Verändern des im Pufferspeicher gespeicherten Headers in Abhängigkeit von dem in das Makropaket einzufügenden Datenpaket;
c2) Löschen des ursprünglichen Headers mit Hilfe eines vor oder nach der Verzögerungsleitung angeordneten Schalters;
c3) Rekonstruieren eines neuen Makropakets unter der Kontrolle der Ablaufsteuereinheit, wobei das neue Makropaket das Ergebnis der Rekonstruktion des veränderten Headers, der Ursprungsdaten, die durch die von der optischen Verzögerungsleitung erzeugten Verzögerung verzögert wurden, und des Datenpakets ist, das zuvor im Datenpufferspeicher gespeichert wurde.

10. Verfahren nach Anspruch 5, bei dem die freien Teile des Makropakets lediglich im Lauf von Schritt b) analysiert werden, bestehend aus:
b1) Entnehmen eines Teils des von dem Zwischenknoten empfangenen optischen Signals mit Hilfe eines Entnahmekopplers (OPC), sodass dieser Teil in ein elektronisches Signal umgewandelt wird, wobei der andere Teil des Signals im optischen Bereich bleibt;
b2) Extrahieren des Headers des von dem elektronischen Signal getragenen Makropakets und Speichern des Headers in einem Header-Pufferspeicher;
b3) Analysieren des Headers durch eine Ablaufsteuereinheit, sodass das Ziel des Makropakets bestimmt wird;
b4) auf dem Teil des entnommenen Signals Messen der Dauer, während der kein Signal vorhanden ist, sodass die maximale Dauer des einzufügenden Datenpakets bestimmt wird.

11. Verfahren nach Anspruch 10, bei dem der Teil des optischen Signals, der im optischen Bereich geblieben ist, in einer Verzögerungsleitung während einer Zeit verzögert wird, die der Analyse- und Verarbeitungszeit des aus dem optischen Signal entnommenen Teils entspricht.

12. Verfahren nach Anspruch 10, bei dem der Schritt c) darin besteht, auf dem Netzwerk das Datenpaket zu übertragen, das zuvor im Datenpufferspeicher gespeichert wurde, wenn Schritt b) ermöglicht hat, das Fehlen eines optischen Signals während einer Zeit zu erkennen, die mindestens der Zeit des Datenpakets entspricht.

13. System, welches Mittel umfasst, die für die Umsetzung der Schritte des Verfahrens nach einem der vorgenannten Ansprüche geeignet sind.
